# EUROPEAN PATENT APPLICATION

(11) **EP 3 862 357 A1**
(43) Date of publication of application: **11.08.2021**
(21) Application number: 19869303.8
(22) Date of filing: 29.08.2019
(51) Int. Cl.: C07F 1/04, C07C 1/26, C07C 9/14, C07C 9/22

(54) **METHOD FOR SYNTHESIZING AROMATIC SODIUM COMPOUND**

(30) Priority: 01.10.2018 JP 2018186775
(71) Applicant: Kobelco Eco-Solutions Co., Ltd, Kobe-shi, Hyogo 6510072 (JP); National University Corporation Okayama University, Kita-ku Okayama-shi Okayama 700-8530 (JP)
(72) Inventor: MURAKAMI, Yoshiaki, Kobe-shi, Hyogo 651-0072 (JP); TSUBOUCHI, Gen, Kobe-shi, Hyogo 651-0072 (JP); KATAYAMA, Yumiko, Kobe-shi, Hyogo 651-0072 (JP); TAKAI, Kazuhiko, Okayama-shi, Okayama 700-8530 (JP); ASAKO, Sobi, Okayama-shi, Okayama 700-8530 (JP)
(74) Representative: Winter, Brandl - Partnerschaft mbB
(86) International application number: PCT/JP2019/033980
(87) International publication number: WO 2020/071018

(57) **Abstract**

A technique that can synthesize an aromatic sodium compound easily, in a short time, and efficiently through a small number of steps is constructed. The invention comprises a step A in which, in a reaction solvent, an alkyl halide compound represented by general formula I (R¹-X¹) (wherein R¹ is an alkyl group and X¹ is a halogen atom) is reacted with a dispersion that is obtained by dispersing sodium into a dispersion solvent, thereby obtaining an alkyl sodium compound represented by general formula II (R¹-Na) (wherein R¹ is the same as R¹ of general formula I); and a step B in which, a halogenated aromatic compound represented by general formula III (R²-X²) (wherein, in the formula, R² is an aromatic group that may have a substituent that does not react with sodium, and X² is a halogen atom) is added into the reaction solvent after the step A to react with the alkyl sodium compound represented by general formula II (R¹-Na), which has been obtained in the step A, thereby performing halogen-sodium exchange and obtaining an aromatic sodium compound represented by general formula IV (R²-Na).

## Description

### Technical Filed

The present invention relates to a method for synthesizing an aromatic sodium compound.

### Background Art

Organometallic reagents such as Grignard reagents, organic lithium reagents, and organosodium reagents have been used in organic synthesis reactions of medical and agricultural chemicals, electronic materials, and functional materials such as their intermediates. In particular, the use of cross-coupling reactions between organometallic reagents and organic halides has been rapidly expanding in recent years.

Grignard reagents can be generally obtained by reacting organic halides with metallic magnesium in anhydrous ether. However, it is known that there are compounds (functional groups) that are not compatible with the preparation of Grignard reagents, and there are limitations in their conversion to Grignard reagents. For example, some heterocyclic compounds and compounds having an electron-withdrawing groups on an aromatic ring thereof cannot be prepared as Grignard reagents.

From some of such compounds, for example, organoboron compounds can be prepared via organolithium compounds, and such organoboron compounds can be used in Suzuki-Miyaura cross coupling reaction. For the preparation of organoboron compounds, for example, an organoboron compound used in Suzuki-Miyaura coupling reaction can be synthesized by reacting 2-bromopyridine, a heterocyclic compound, with n-butyl lithium in tetrahydrofuran (hereinafter referred to as "THF"), replacing bromine on the pyridine ring with lithium by lithium-halogen exchange reaction, followed by reacting with a borate ester compound (e.g., trimethyl borate (B(OMe)₃)).

Regarding organic sodium reagents, for example, Non-Patent Document 1 discloses a synthesis of pentyl sodium by reacting pentyl chloride with sodium (page 3788). Furthermore, Non-Patent Document 2 discloses a method for synthesizing aryl sodium by reacting aryl halide with pentyl sodium synthesized by the method described in Non-Patent Document 1.

### Citation List

### Non-Patent Literature

[Non-Patent Literature 1] Avery A. Morton et al., "Polymerization. XII. The Metalation of Olefins and Dienes and their Use in Alfin Polymerization of Butadiene", Journal of the American Chemical Society, 1950, 72 (8), pp 3785-3792
[Non-Patent Literature 2] A. G. Lidstone et al., "METAL-HALOGEN interchange reactions with sodium-N-amyl", Chemistry and industry, May 10 1958

### Summary of Invention

### Technical Problem

However, the price of lithium compounds has been rising due to the tight demand caused by increasing demand for lithium-ion batteries. In particular, organolithium compounds are very expensive, and the reaction temperature needs to be cooled down to -78 °C during a lithium-halogen exchange reaction, which causes a problem that the utility cost rises. In addition, due to the limit of recoverable reserves of lithium, and the like, the use of lithium compounds also has a problem from the viewpoint of sustainability.

Also, according to the method described in the Non-Patent Document 2, since only an amount of sodium that is sufficient to synthesize 1 equivalent of pentyl sodium is added for aryl sodium, it reacts with a by-product pentyl bromide to form decane and the yield of aryl sodium does not improve (about 50%), which is problematic. In order to improve the yield of aryl sodium, a technique for preventing the generated pentyl sodium from being consumed in the reaction with the by-product is required.

Therefore, it is an object of the present invention to construct a technique for preparing an aromatic sodium compound from compounds that are difficult to prepare conventional organometallic reagents such as a Grignard reagent. In addition, it is a challenge to construct a technique with which an aromatic sodium compound can be synthesized easily, in a short time, and efficiently through a small number of steps. In particular, it is a challenge to construct a technique to synthesize an aromatic sodium compound using reagents that are inexpensive and easily available from the viewpoint of sustainability.

### Solution to Problem

As a result of repeated studies to solve the above problems, the present inventors have found that an aromatic sodium compound can be synthesized efficiently by reacting an alkyl halide compound with a dispersion that is obtained by dispersing sodium into a dispersion solvent in a reaction solvent such as a normal paraffin solvent to obtain an alkyl sodium compound, followed by adding a halogenated aromatic compound, and reacting with the alkyl sodium compound to perform halogen-sodium exchange. In such a synthesis method, an aromatic sodium compound can be synthesized under mild conditions without need for reagents that are problematic in terms of cost and sustainability. In addition, an organic sodium compound can be synthesized inexpensively through a small number of steps without requiring a complicated and expensive treatment step. Furthermore, we have found that an aromatic sodium compound can be synthesized from compounds that are difficult to synthesize conventional organometallic reagents such as Grignard reagents. The present inventors have completed the present invention based on these findings.

That is, the present invention relates to a method for synthesizing an aromatic sodium compound, and the characteristic configuration thereof is that the method comprises:
a step A in which, in a reaction solvent, an alkyl halide compound represented by general formula I (R¹-X¹) (wherein R¹ is an alkyl group and X¹ is a halogen atom) is reacted with a dispersion that is obtained by dispersing sodium into a dispersion solvent, thereby obtaining an alkyl sodium compound represented by general formula II (R¹-Na) (wherein R¹ is the same as R¹ of general formula I); and
a step B in which, a halogenated aromatic compound represented by general formula III (R²-X²) (wherein, in the formula, R² is an aromatic group that may have a substituent that does not react with sodium, and X² is a halogen atom) is added into the reaction solvent after the step A to react with the alkyl sodium compound represented by general formula II (R¹-Na), which has been obtained in the step A, thereby performing halogen-sodium exchange and obtaining an aromatic sodium compound represented by general formula IV (R²-Na) (wherein R² is the same as R² of general formula III).

According to this configuration, it is possible to provide a synthesis method in which an aromatic sodium compound can be synthesized efficiently by reacting an alkyl halide compound with a dispersion that is obtained by dispersing sodium into a dispersion solvent in a reaction solvent to obtain an alkyl sodium compound, followed by adding a halogenated aromatic compound, and reacting with the alkyl sodium compound to perform halogen-sodium exchange. According to this configuration, by using a dispersion that is obtained by dispersing sodium which is easy to handle into a dispersion solvent, an aromatic sodium compound can be synthesized easily and inexpensively in a short time through a small number of steps, under mild conditions and without the need for complicated chemical methods, which is very advantageous economically and industrially. Since sodium is extremely widely distributed on the earth, this technique is also excellent for sustainability. Further, according to this configuration, since an aromatic sodium compound can be synthesized from compounds that are difficult to synthesize conventional organometallic reagents such as Grignard reagents, an aromatic sodium compound can be synthesized from a wide variety of compounds. Therefore, the range of compounds that can be suitably used for coupling reaction or the like can be expanded. Further, an aromatic sodium compound synthesized by the method for synthesizing an aromatic sodium compound in the present configuration is suitably used for coupling reaction and as a precursor for syntheses of coupling compounds to be used in coupling reaction. Therefore, the method for synthesizing an aromatic sodium compound in this configuration can be used in various technical fields such as syntheses of functional materials such as medicine, agrochemicals, and electronic materials.

Another characteristic configuration is that R² is an aromatic group having at least one electron-withdrawing group on an aromatic ring thereof.

According to this configuration, an aromatic sodium compound can be synthesized also from compounds having at least one electron-withdrawing group on an aromatic ring thereof, which have been difficult to prepare organometallic reagents such as Grignard reagents in the past. Therefore, according to this configuration, an aromatic sodium compound can be synthesized from a wide range of compounds, and the range of compounds that can be suitably used in coupling reaction or the like can be expanded.

Another characteristic configuration is that the method further comprises a step C in which the alkyl halide compound represented by general formula V (R¹-X²) obtained by halogen-sodium exchange is subjected to Wurtz coupling reaction with the dispersion that is obtained by dispersing sodium into a dispersion solvent.

According to this configuration, Wurtz coupling reaction of the alkyl halide compounds represented by general formula V (R¹-X²) obtained by halogen-sodium exchange between the halogenated aromatic compound represented by general formula III (R²-X²) in the step B and the alkyl sodium compound represented by general formula II (R¹-Na) is performed. With this, side reactions by the alkyl halide compound represented by general formula V (R¹-X²), for example, side reactions with the alkyl sodium compound represented by general formula II (R¹-Na) that remain unreacted can be suppressed, and the aromatic sodium compound represented by general formula IV (R²-Na), which is the target compound, can be synthesized efficiently.

Another characteristic configuration is that the dispersion that is obtained by dispersing sodium into a dispersion solvent has a molar ratio of 3 or more to 4 or less to the alkyl halide compound in an entire synthesis system.

According to this configuration, by optimizing the used amount of the dispersion that is obtained by dispersing sodium into a dispersion solvent, side reactions can be suppressed and an aromatic sodium compound can be synthesized with even higher efficiency and higher purity.

### Brief Description of Drawings

Fig. 1 is a figure which summarizes synthesis conditions and results of Example 1, in which a synthesis method of an aromatic sodium compound according to this embodiment has been examined.
Fig. 2 is a figure which summarizes synthesis conditions and results of Examination Example 1, in which a synthesis method of alkyl sodium compounds has been examined.
Fig. 3 is a figure which summarizes the synthesis conditions and results of Example 2, in which the synthesis method of an aromatic sodium compound according to this embodiment has been examined.
Fig. 4 is a figure which summarizes the synthesis conditions and results of Example 3, in which the synthesis method of an aromatic sodium compound according to this embodiment has been examined.
Fig. 5 is a figure which summarizes the synthesis conditions and results of Example 4, in which the synthesis method of an aromatic sodium compound according to this embodiment has been examined.
Fig. 6 is a figure which summarizes the synthesis conditions and results of Example 5, in which the synthesis method of an aromatic sodium compound according to this embodiment has been examined.
Fig. 7 is a figure which summarizes the synthesis conditions and results of Example 6, in which the synthesis method of an aromatic sodium compound according to this embodiment has been examined.

### Description of Embodiments

The following is a detailed description of a method for synthesizing an aromatic sodium compound according to embodiments of the present invention. However, the present invention is not limited to the embodiments described below.

The method for synthesizing an aromatic sodium compound according to the embodiment comprises: a step Ain which, in a reaction solvent, an alkyl halide compound represented by general formula I (R¹-X¹) is reacted with a dispersion that is obtained by dispersing sodium into a dispersion solvent, thereby obtaining an alkyl sodium compound represented by general formula II (R¹-Na); and a step B in which, a halogenated aromatic compound represented by general formula III (R²-X²) is added into the reaction solvent after the step A to react with the alkyl sodium compound represented by general formula II, which has been obtained in the step A, thereby obtaining an aromatic sodium compound represented by general formula IV (R²-Na).

### [Step A]

The step A is a step in which, in a reaction solvent such as a normal (n) paraffin-based solvent, an alkyl halide compound represented by general formula I (R¹-X¹) is reacted with a dispersion that is obtained by dispersing sodium into a dispersion solvent to obtain an alkyl sodium compound represented by general formula II (R¹-Na). The organic halide compound represented by general formula I (R¹-X¹) is an organic compound containing a covalently bonded halogen atom, and serves as a starting compound in the method for synthesizing an aromatic sodium compound according to the embodiment of the present invention.

In general formula I (R¹-X¹), R¹ is an alkyl group. The alkyl group is regardless of whether it is linear or branched and is not particularly limited in chain length, and also includes a cycloalkyl group having a cyclic structure, but is preferably a linear alkyl group. Examples of the alkyl group include, but are not limited to, an alkyl group having preferably 1 to 20 carbon atoms, particularly preferably 3 to 20 carbon atoms. Specifically, examples of the alkyl group include, but are not limited to, a methyl group, an ethyl group, a propyl group, a butyl group, a methyl group, an ethyl group, a propyl group, an isopropyl group, a n-butyl group, an isobutyl group, a s-butyl group, a t-butyl group, a n-pentyl group, an isopentyl group, a neopentyl group, a t-pentyl group, a s-pentyl group, a 2-methylbutyl group, a 1-ethylpropyl group, a 2-ethylpropyl group, a n-hexyl group, an isohexyl group, a neohexyl group, a t-hexyl group, a 2,2-dimethylbutyl group, a 2-methylpentyl group, a 3-methylpentyl group, a 1-ethylbutyl group, a 2-ethylbutyl group, a 1-propylpropyl group, a n-heptyl group, an isoheptyl group, a s-heptyl group, a t-heptyl group, a 2,2-dimethylpentyl group, a 3,3-dimethylpentyl group, a 1-methylhexyl group, a 2-methylhexyl group, a 3-methylhexyl group, a 4-methylhexyl group, a 1-ethylpentyl group, a 2-ethylpentyl group, a 3-ethylpentyl group, a 1-propylbutyl group, a 2-propylbutyl group, a n-octyl group, an isooctyl group, a t-octyl group, a neooctyl group, a 2,2-dimethylhexyl group, a 3,3-dimethylhexyl group, a 4,4-dimethylhexyl group, a 1-methylheptyl group, a 2-methylheptyl group, a 3-methylheptyl group, a 4-methylheptyl group, a 5-methylheptyl group, a 1-ethylhexyl group, a 2-ethylhexyl group, a 3-ethylhexyl group, a 4-ethylhexyl group, a 1-propylpentyl group, a 2-propylpentyl group, a 3-propylpentyl group, a n-nonyl group, an isononyl group, a t-nonyl group, a 1-methyloctyl group, a 2-methyloctyl group, a 3-methyloctyl group, a 4-methyloctyl group, a 5-methyloctyl group, a 6-methyloctyl group, a n-decyl group, an isodecyl group, a t-decyl group, a 1-methylnonyl group, 2-methylnonyl group, 3-methylnonyl group, a 4-methylnonyl group, a 5-methylnonyl group, a 6-methylnonyl group, a 7-methylnonyl group and the like.

The number of ring members of the cycloalkyl group is not particularly limited. Not only groups having a monocyclic ring, but also groups having ring assemblies such as a spiro ring and the like are included. Examples of the cycloalkyl group include, but are not limited to, a cycloalkyl group having preferably 3 to 10 carbon atoms, and particularly preferably 3 to 7 carbon atoms. Specifically, examples of the cycloalkyl group include, but are not limited to, a cyclopropyl group, a cyclobutyl group, a cyclopentyl group, a cyclohexyl group, a cycloheptyl group, a cyclooctyl group, and the like.

X¹ is a halogen atom, specifically a chlorine atom, a bromine atom, an iodine atom, or a fluorine atom, but preferably a chlorine atom. The use of inexpensive organic chlorides as starting compounds is further advantageous economically.

The alkyl halide compound represented by general formula I (R¹-X¹), a starting compound, may be commercially available or may be manufactured by methods known in the art.

The dispersion that is obtained by dispersing sodium into a dispersion solvent (hereinafter, may be abbreviated as "SD", which is an abbreviation for Sodium Dispersion) is one that is obtained by dispersing sodium as fine particles into an insoluble solvent, or by dispersing sodium into an insoluble solvent in a liquid state. Examples of sodium include metallic sodium, alloys containing metallic sodium, and the like. Fine particles having an average particle size of preferably less than 10 µm, and particularly preferably less than 5 µm can be used. The average particle size is represented by a diameter of a sphere having a projected area equivalent to the projected area obtained by image analysis of a micrograph.

As a dispersion solvent, a solvent known in the art can be used as long as sodium can be dispersed as fine particles or dispersed into an insoluble solvent in a liquid state, and a reaction between an alkyl halide compound and SD, and a sodium-halogen exchange reaction between SD, an alkyl sodium compound, and an aromatic halide compound are not inhibited. Examples of the solvent include aromatic solvents such as xylene, toluene, and the like; paraffin solvents such as n-paraffin solvents and the like such as n-decane, and the like; heterocyclic compound solvents such as tetrahydrothiophene, and the like; and mixed solvents thereof. The dispersion solvent and the reaction solvent may be the same type of solvents or different types of solvents.

It is preferable to use SD having an activity in which, when SD is added to chlorobenzene in an amount equivalent to 2.1 moles or more and reacted in a reaction solvent, the yield of phenyl sodium relative to the added chlorobenzene is 99.0% or more. By using such highly active SD, a synthetic reaction of an aromatic sodium compound can proceed more smoothly and efficiently. Here, in order to maintain high SD activity, it is preferable to store SD in a container having a high gas barrier property, such as a glass vial, or the like. However, it does not exclude storage in a container having a low gas barrier property, and in that case, after production of SD, SD is used immediately, for example, within several weeks, preferably within 3 weeks.

As the reaction solvent, a solvent known in the art can be used as long as the solvent does not interfere with the reaction of each step. For example, paraffin solvents such as n-paraffin solvents, cycloparaffin solvents, and the like; ether solvents; aromatic solvents; amine solvents; and heterocyclic compound solvents can be used. As the paraffin solvents, cyclohexane, n-hexane, n-decane, and the like are particularly preferred. As the ether solvents, cyclic ether solvents are preferred, and tetrahydrofuran (hereinafter, may be abbreviated as "THF"), and the like can be preferably used. As the aromatic solvents, xylene, toluene, benzene, and the like can be preferably used. As the amine solvents, ethylenediamine, and the like can be preferably used. As the heterocyclic compound solvents, tetrahydrothiophene and the like can be used. Only one of these may be used, or two or more of these may be used in combination as a mixed solvent. Here, the same type of solvents as the above dispersion solvents and reaction solvents may be used, or different types of solvents may be used. Particularly preferably, an n-paraffin solvent which is a linear saturated hydrocarbon solvent, or toluene which is an aromatic solvent is used.

The reaction temperature in the step A can be set appropriately depending on the type and amount of alkyl halide compounds, SD, and reaction solvents, as well as a reaction pressure and the like. Specifically, it is preferable to set the reaction temperature at 0 °C or lower. In particular, when a cyclic ether solvent is used as a reaction solvent, the temperature should be set at -78 to 0 °C in order to prevent the solvent itself from reacting. If necessary, temperature control means for heating, cooling or the like may be provided. By appropriately controlling the type and amount of reaction solvents, a target compound can be synthesized more efficiently.

The reaction time in the step A is also not particularly limited, and may be appropriately set according to the type and amount of alkyl halide compounds, SD, and reaction solvents, as well as a reaction pressure, a reaction temperature, and the like. It is usually carried out for 15 minutes to 24 hours, preferably 20 minutes to 6 hours.

The step A needs to be performed under an inert gas atmosphere filled with argon gas, nitrogen gas, or the like.

With the reaction in the step A, an alkyl sodium compound represented by general formula II (R¹-Na) can be obtained.

The alkyl sodium compound represented by general formula II (R¹-Na) is obtained by substituting a halogen atom of a halogenated alkyl compound represented by general formula I (R¹-X¹) with sodium. Therefore, in the alkyl sodium compound represented by general formula II, R¹ is the same as R¹ of general formula I described above, and Na is a sodium atom.

### [Step B]

The step B is a step in which a halogenated aromatic compound represented by general formula III (R²-X²) is added into the reaction solvent after the reaction in the step A described above, and is reacted with the alkyl sodium compound represented by general formula II (R¹-Na) obtained in the step A to obtain an aromatic sodium compound represented by general formula IV (R²-Na). The halogenated aromatic compound represented by general formula III (R²-X²) is an organic compound containing a covalently bonded halogen atom, and is added into the reaction solvent in which the alkyl sodium compound represented by general formula II (R¹-Na) was generated by the reaction of the above step A.

In general formula III (R²-X²), R² is an aromatic group. Examples of the aromatic group include an aromatic hydrocarbon group, and an aromatic heterocyclic group.

The aromatic hydrocarbon group is not particularly limited as long as the group has an aromatic ring. Not only groups having a monocyclic ring but also groups having ring assemblies such as a fused ring, a spiro ring, and the like are included. The number of members is not particularly limited. For example, an aromatic hydrocarbon group having preferably 6 to 22 carbon atoms, particularly preferably 6 to 14 carbon atoms, is exemplified. Examples of the aromatic hydrocarbon group include, but are not limited to, a monocyclic six-membered ring phenyl group; a bicyclic naphthyl group, pentalenyl group, indenyl group, azulenyl group, and the like; a tricyclic biphenylenyl group, indacenyl group, acenaphthylenyl group, fluorenyl group, phenalenyl group, phenanthryl group, anthryl group, and the like; a tetracyclic fluoranthenyl, aceanthrylenyl group, triphenylenyl group, pyrenyl group, naphthacenyl group, and the like; a pentacyclic perylenyl group, tetraphenylenyl group, and the like; a hexacyclic pentacenyl, and the like; a heptacyclic rubicenyl group, coronenyl group, heptacenyl group, and the like. In particular, a naphthyl group and the like are exemplified.

The aromatic heterocyclic group is an aromatic heterocyclic group having 1 or more heteroatoms as ring-constituting atoms. Not only groups having a monocyclic ring but also groups having ring assemblies such as a fused ring and a spiro ring are included. The number of members is not particularly limited. The heteroatom is not particularly limited as long as the atom does not react with sodium as a ring-constituting atom. The number of heteroatoms is not particularly limited, and the positions of heteroatoms are also not limited. As the heteroatom, preferably, an oxygen atom, a nitrogen atom, a sulfur atom and the like are exemplified. For example, an aromatic heterocyclic group having the carbon atom number of preferably 1 to 5, particularly preferably 3 to 5, and having the heteroatom number of preferably 1 to 4, particularly preferably 1 to 3 is exemplified. In the case of having a plurality of heteroatoms, the atoms may be of the same or different types.

For example, examples of the monocyclic aromatic heterocyclic group include, but are not limited to, nitrogen-containing aromatic heterocyclic groups such as a 5-membered cyclic pyrrolyl group, pyrazolyl group, pyridyl group, and imidazolyl group, and the like, 6-membered cyclic pyrazinyl group, pyrimidinyl group, pyridazinyl group and the like; oxygen-containing aromatic heterocyclic groups such as 5-membered cyclic furyl group, and the like; sulfur-containing aromatic heterocyclic groups such as 5-membered cyclic thienyl group, and the like; nitrogen-containing oxygen aromatic heterocyclic groups such as a 5-membered cyclic oxazolyl group, isoxazolyl group, furazanyl group, and the like; nitrogen-containing sulfur aromatic heterocyclic groups such as a 5-membered thiazolyl group, isothiazolyl group, and the like. In particular, a pyridyl group is exemplified.

Examples of the polycyclic aromatic heterocyclic group include, but are not limited to, nitrogen-containing aromatic heterocyclic groups such as a bicyclic indolizinyl group, isoindolyl group, indolyl group, indazolyl group, purinyl group, isoquinolyl group, quinolyl group, phthalazinyl group, naphthyridinyl group, quinoxalinyl group, quinazolinyl group, cinnolinyl group, and the like, a tricyclic carbazolyl group, carbolinyl group, phenatridinyl group, acridinyl group, perimidinyl group, phenanthrolinyl group, phenazinyl group, and the like; oxygen-containing aromatic heterocyclic groups such as a bicyclic benzofuranyl group, isobenzofuranyl group, benzopyranyl group, and the like; sulfur-containing aromatic heterocyclic groups such as a bicyclic benzothienyl group, and the like, a tricyclic thianthrenyl group, and the like; nitrogen-containing oxygen aromatic heterocyclic groups such as a bicyclic benzoxazolyl group, benzoisooxazolyl group, and the like; nitrogen-containing sulfur aromatic heterocyclic groups such as a bicyclic benzothiazolyl group, benzoisothiazolyl group, a tricyclic phenothiazinyl group, and the like; oxygen-containing sulfur aromatic heterocyclic groups such as tricyclic phenoxathiinyl group, and the like. In particular, a quinolyl group and an isoquinolyl group are exemplified.

The aromatic group may have substituents. The substituents may be 1 or more substituents, and when the group have a plurality of substituents, the substituents may be the same or different from each other. Further, the position of the substituents is not particularly limited. Examples of the substituents include, but are not limited to, an aliphatic hydrocarbon group, an alicyclic hydrocarbon group, an alicyclic heterocyclic group, an aromatic hydrocarbon group, an aromatic heterocyclic group, an alkoxy group, a cycloalkoxy group, an aryloxy group, an aralkyloxy group, an alicyclic heterocyclic oxy group, an aromatic heterocyclic oxy group, an alkylthio group, a cycloalkylthio group, an arylthio group, an aralkylthio group, an alicyclic heterocyclic thio group, an aromatic heterocyclic thio group, an alkylamino group, a cycloalkylamino group, an arylamino group, an aralkylamino group, an alicyclic heterocyclic amino group, an aromatic heterocyclic amino group, an acyl group and the like, which may have substituents.

The aliphatic hydrocarbon group, which may be included as a substituent, may be linear or branched and may be saturated or unsaturated. In addition, the chain length is not particularly limited. Therefore, in addition to the alkyl group described above, an alkenyl group and an alkynyl group may be included, and although not limited thereto, the alkyl group, the alkenyl group, and the alkynyl group which have preferably 1 to 20 carbon atoms, particularly preferably 3 to 20 carbon atoms, are exemplified. For example, examples of the alkenyl group include, but are not limited to, an ethenyl group, a propenyl group, a butenyl group, a pentenyl group, a hexenyl group, a heptenyl group, an octenyl group and the like. Specific examples of the alkynyl group include, but are not limited to, an ethynyl group, a propynyl group, a butynyl group, a pentynyl group, a heptynyl group, an octynyl group and the like. A methyl group is particularly preferred.

The alicyclic hydrocarbon group, which may be included as a substituent, is regardless of whether the bond between the ring constituent atoms is saturated or unsaturated, and has no particular limitation on the number of ring members. Further, not only groups having single rings but also groups having ring assemblies such as a fused ring, a spiro ring, and the like are included. Therefore, the alicyclic hydrocarbon group may be a cycloalkenyl group or the like in addition to the cycloalkyl group described above, and examples of the alicyclic hydrocarbon group include, but are not limited thereto, a cycloalkyl group and a cycloalkenyl group which have preferably 3 to 10 carbon atoms, particularly preferably 3 to 7 carbon atoms; a cycloalkenyl group which has preferably 4 to 10 carbon atoms, particularly preferably 4 to 7 carbon atoms, and the like. For example, specific examples of the cycloalkenyl group include, but are not limited to, a cyclopropenyl group, a cyclobutenyl group, a cyclopentenyl group, a cyclohexenyl group, a cycloheptenyl group, a cyclooctenyl group and the like.

Examples of the aromatic hydrocarbon group and the aromatic heterocyclic group, which may be included as substituents, include groups similar to the groups shown above.

Examples of alkoxy group, which may be included as a substituent, include an alkoxy group having preferably 1 to 10 carbon atoms, and specifically include, but are not limited to, a methoxy group, an ethoxy group, a propoxy group, a butoxy group, a pentyloxy group, a hexyloxy group, and the like. Examples of the cycloalkoxy group, which may be included as a substituent, include a cyclopropoxy group having preferably 3 to 10 carbon atoms, and include a cyclobutoxy group, a cyclopentyloxy group, and a cyclohexyloxy group. Examples of the aryloxy group, which may be included as a substituent, include an aryloxy group having preferably 6 to 20 carbon atoms, and specifically include, but are not limited to, a phenyloxy group and a naphthyloxy group. Examples of the aralkyloxy group, which may be included as a substituent, include an aralkyloxy group having preferably 7 to 11 carbon atoms, and specifically include, a benzyloxy group and a phenethyloxy group. Examples of the alicyclic heterocyclic oxy group and the aromatic heterocyclic oxy group, which may be included as substituents, include those having the alicyclic heterocyclic group and the aromatic heterocyclic group shown above as the heterocyclic portion.

Examples of the alkylthio group, which may be included as a substituent, include an alkylthio group having preferably 1 to 20 carbon atoms, and include, but are not limited to, a methylthio group, an ethylthio, group, a propylthio group, a butylthio group, a pentylthio group, and a hexylthio group. Examples of the cycloalkylthio group, which may be included as a substituent, include a cycloalkylthio group having 3 to 10 carbon atoms, and specifically include, but are not limited to, a cyclopropylthio group, a cyclobutylthio group, a cyclopentylthio group, a cyclohexylthio group, and the like. Examples of the arylthio group, which may be included as a substituent, include an arylthio group having preferably 6 to 20 carbon atoms, and specifically include, but are not limited to, a phenylthio group and a naphthylthio group. Examples of the aralkylthio group include an aralkylthio group preferably having 7 to 11 carbon atoms, and specifically include, but not limited to, a benzylthio group, a phenethylthio group, and the like. The alicyclic heterocyclic thio group and the aromatic heterocyclic thio group, which may be included as substituents, include those having the alicyclic heterocyclic group and the aromatic heterocyclic group shown above as the heterocyclic portion.

Each of the above groups, which may be included as substituents, may further have substituents. The groups may have 1 or more substituents, and in the case of having multiple substituents, the substituents may be identical or different from each other. The position of the substituents is not particularly limited. The substituents are exemplified as substituents similar to those shown above.

As the substituents, it is preferable to have at least one electron-withdrawing group on the aromatic ring of the aromatic group. The electron-withdrawing group is not particularly limited as long as the group is a substituent that exhibits electron-withdrawing properties when bonded to the aromatic ring, and examples of the group include, but are not limited to, fluorine, chlorine, a trifluoromethyl group, and the like.

X² is a halogen atom, specifically a chlorine atom, a bromine atom, an iodine atom, or a fluorine atom, but preferably a chlorine atom or a bromine atom. The use of inexpensive organic chlorides is even more economically advantageous. The use of organic bromides has the advantage that Wurtz coupling of general formula V (R¹-X²) which is a by-product of the step B for obtaining general formula IV (R²-Na) proceeds more easily.

As the halogenated aromatic compound represented by general formula III (R²-X²), a commercially available one may be used, or one generated by a method known in the art may be used.

The reaction temperature in the step B is not particularly limited, and may be appropriately set depending on the type and amount of the halogenated aromatic compound to be added in the step B, the alkyl sodium compound generated in the step A, SD and the reaction solvent, as well as the reaction pressure and the like. Specifically, the reaction temperature is preferably set to a temperature that does not exceed the boiling point of the reaction solvent. Under pressure, the reaction temperature can be set at a high temperature because the temperature is higher than the boiling point under atmospheric pressure. The reaction can be also carried out at room temperature, preferably 0 to 100 °C, particularly preferably 20 to 80 °C, and even more preferably room temperature to 50 °C. When a cyclic ether solvent is used as the reaction solvent, the temperature should be set to -78 to 0 °C in order to prevent the solvent itself from reacting. It is not necessary to provide any special temperature control means for heating, cooling, or the like, but a temperature control means may be provided if necessary.

The reaction time in the step B is also not particularly limited and may be set appropriately depending on the type and amount of the halogenated aromatic compound to be added in the step B, the alkyl sodium compound generated in the step A, SD, and the reaction solvent, as well as the reaction pressure and reaction temperature, and the like. The reaction is usually carried out for 15 minutes to 24 hours, preferably 20 minutes to 6 hours.

Step B needs to be performed in an inert gas atmosphere filled with argon gas, nitrogen gas, or the like.

The aromatic sodium compound presented by general formula IV (R²-Na) obtained by the step B is a compound in which a halogen atom of the halogenated aromatic compound represented by general formula III (R²-X²) added in the step B has been substituted with sodium. Therefore, in general formula IV (R²-Na), R² is the same as R² in general formula III described above, and Na is a sodium atom. The obtained aromatic sodium compound may be purified by column chromatography, distillation, recrystallization, or other purification means known in the art. It may be configured that the halogenated alkyl compound which is the starting compound remaining unreacted and the halogenated aromatic compound added in the step B are recovered and subjected to reactions of the step A and the step B again.

The method for synthesizing an aromatic sodium compound according to the present embodiment may further include a step C. The step C is a step of carrying out Wurtz coupling reaction of the alkyl halide compound represented by general formula V (R¹-X²) obtained by sodium-halogen exchange in the step B with SD. As a result, alkane (paraffin) represented by general formula VI (R¹-R¹) is generated. Since alkane (paraffin) is a compound that can be suitably used as a reaction solvent by converting the alkyl halide compound represented by general formula V (R¹-X²) into alkane (paraffin) in this way, side reactions by the alkyl halide compound represented by general formula V (R¹ - X²), such as side reactions with the alkyl sodium compound represented by general formula II (R¹-Na) that remain unreacted, can be effectively suppressed, and an aromatic sodium compound can be synthesized with higher efficiency and higher purity. For example, when n-pentyl halide (C₅H₁₁X₁) is used as the alkyl halide compound represented by general formula I (R¹-X¹) in the step A, it can be converted to n-decane (C₁₀H₂₂) which is preferably used as a reaction solvent, by the Wurz coupling reaction in the step C after going through C₅H₁₁Na in the step A and subsequent C₅H₁₁X₂ in the step B.

The reaction conditions in the step C are not particularly limited as long as Wurtz coupling reaction between the alkyl halide compounds represented by general formula V (R¹-X²) can proceed, and can be set appropriately in accordance with the reaction conditions of the step A and the step B.

The reaction formula of the method for synthesizing an aromatic sodium compound according to this embodiment is shown below.

R¹-X¹ + 3Na (SD) → R¹-Na + NaX¹ + Na ... (1)

R²-X² + R¹-Na → R²-Na + R¹-X²... (2)

R¹-X²+ Na (SD) → 1/2 R¹-R¹+ Na-X² ... (3)

The above (1) to (3) can be summarized into one reaction formula as follows.

R¹-X¹ + R²-X² + 3 Na (SD) → R²-Na + NaX¹ + Na-X² +1/2 R¹-R¹

The amount of SD used in the synthesis method of an aromatic sodium compound according to this embodiment is preferably an amount for reaction that results in a molar ratio of 3 or more to 4 or less in the entire synthesis system with respect to the alkyl halide compound represented by general formula I (R¹-X¹). By reacting in this amount, side reactions can be effectively suppressed, and an aromatic sodium compound can be synthesized with high efficiency and high purity. Here, the amount of substance of SD means an amount of substance in alkali metal equivalent contained in SD.

In the method for synthesizing an aromatic sodium compound according to the present embodiment, an aromatic sodium compound can be synthesized efficiently by reacting an alkyl halide compound with a dispersion that is obtained by dispersing sodium into a dispersion solvent in a reaction solvent to obtain an alkyl sodium compound, followed by adding a halogenated aromatic compound, and reacting with the alkyl sodium compound to perform halogen-sodium exchange. In the method of synthesizing an aromatic sodium compound according to the present embodiment, by using SD which is easy to handle, an aromatic sodium compound can be synthesized easily and inexpensively in a short time through a small number of steps under mild conditions and without the need for complicated chemical methods, which is very advantageous economically and industrially. Since sodium is extremely widely distributed on the earth, this technique is also excellent for sustainability.

In the method for synthesizing an aromatic sodium compound according to the present embodiment, an aromatic sodium compound can also be synthesized from some heterocyclic compounds or compounds having at least one electron-withdrawing group on an aromatic ring thereof, which have been difficult to prepare organometallic reagents such as Grignard reagents in the past. Therefore, in the method for synthesizing an aromatic sodium compound according to the present embodiment, an aromatic sodium compound can be synthesized from a wide range of compounds, and the range of compounds that can be suitably used in coupling reaction and the like can be expanded.

The aromatic sodium compound synthesized by the method for synthesizing an aromatic sodium compound according to the embodiment is suitably used as a precursor for coupling reaction and for the syntheses of coupling compounds to be used in coupling reaction. Therefore, the method for synthesizing an aromatic sodium compound according to the embodiment can be used in various technical fields such as the syntheses of functional materials such as medicine, agrochemicals, and electronic materials.

### Example

Hereinafter, the present invention will be described in details by means of Examples below, but the present invention is not limited to these Examples. As SD in the following Examples, a dispersion that is obtained by dispersing metallic sodium as fine particles into n-paraffin oil is used, and the amount of substance of SD is an amount converted to metallic sodium contained in the SD.

### [Example 1] Examination of organic sodium compound (aryl sodium) synthesis conditions

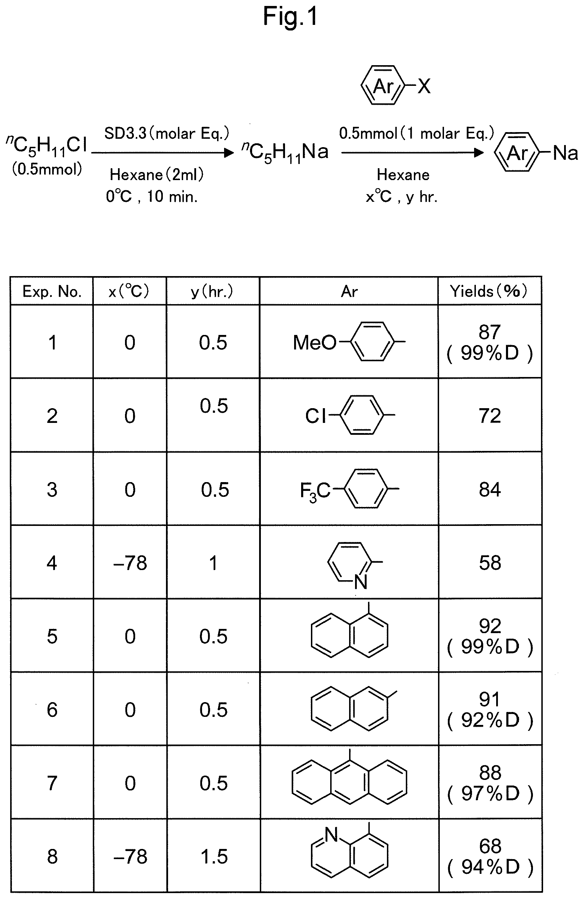

In this example, the syntheses of various organic sodium compounds were examined with the synthesis conditions summarized in Fig. 1.

### Experiment Number 1

In 2 ml of hexane, 3.3 molar equivalents of SD were cooled to 0 °C and 0.5 mmol (= 1 molar equivalent) of n-pentyl chloride, a starting compound, was added dropwise. The mixture was stirred for 10 minutes to synthesize n-pentyl sodium. Subsequently, 0.5 mmol (=1 molar equivalent) of 1-bromo-4-methoxybenzene was added and a reaction was carried out in hexane at 0 °C for 0.5 hours to synthesize 4-methoxyphenyl sodium. A product was evaluated by trapping the product with heavy water (D₂O) and performing ¹H NMR measurement to calculate a yield. As the yield, the ratio (%) of 4-methoxyphenyl sodium actually obtained to 4-methoxyphenyl sodium that could be theoretically generated from 1-bromo-4-methoxybenzene added to the reaction system was calculated. The results are shown in Fig. 1. As shown in Fig. 1, the deuteration rate was 99%, and the actual yield of 4-methoxyphenyl sodium was 87%.

### Experiment Number 2

N-pentyl sodium was synthesized in the same manner as in Experiment Number 1. Subsequently, 0.5 mmol (= 1 molar equivalent) of 1-bromo-4-chlorobenzene was added and a reaction was carried out in hexane at 0 °C for 0.5 hours to synthesize 4-chlorophenyl sodium. A product was evaluated by trapping the product with 1.2 molar equivalents of dimethylphenylchlorosilane, performing ¹H NMR measurement, and calculating a yield in the same manner as in Experiment Number 1. The results are shown in Fig. 1. As shown in Fig. 1, the yield of 4-chlorophenyl sodium was 72%.

### Experiment Number 3

N-pentyl sodium was synthesized in the same manner as in Experiment Number 1. Subsequently, 0.5 mmol (=1 molar equivalent) of 1-bromo-4-(trifluoromethyl) benzene was added and a reaction was carried out in hexane at 0 °C for 0.5 hours to synthesize 4-(trifluoromethyl) phenyl sodium. A product was evaluated by trapping the product with 1.2 molar equivalents of dimethylphenylchlorosilane, performing ¹H NMR measurement, and calculaing the yield in the same manner as in Experiment Number 1. The results are shown in Fig. 1. As shown in Fig. 1, the yield of 4-(trifluoromethyl) phenyl sodium was 84%.

### Experiment Number 4

N-pentyl sodium was synthesized in the same manner as in Experiment Number 1. Subsequently, 0.5 mmol (=1 molar equivalent) of 2-bromopyridine was added and a reaction was carried out in hexane at -78 °C for 1 hour to synthesize 2-pyridyl sodium. A product was evaluated by trapping the product with 1.2 molar equivalents of dimethylphenylchlorosilane, performing ¹H NMR measurement, and calculating a yield in the same manner as in Experiment Number 1. The results are shown in Fig. 1. As shown in Fig. 1, the yield of 2-pyridyl sodium was 58%.

### Experiment Number 5

N-pentyl sodium was synthesized in the same manner as in Experiment Number 1. Subsequently, 0.5 mmol (=1 molar equivalent) of 1-bromopyridine was added and a reaction was carried out in hexane at 0 °C for 0.5 hours to synthesize 1-naphthyl sodium. A product was evaluated by trapping the product with D₂O, performing ¹H NMR measurement, and calculating a yield in the same manner as in Experiment Number 1. The results are shown in Fig. 1. As shown in Fig. 1, the deuteration rate was 99%, and the actual yield of 1-naphthyl sodium was 92%.

### Experiment Number 6

N-pentyl sodium was synthesized in the same manner as in Experiment Number 1. Subsequently, 0.5 mmol (=1 molar equivalent) of 2-bromonaphthalene was added and a reaction was carried out in hexane at 0 °C for 0.5 hours to synthesize 2-naphthyl sodium. A product was evaluated by trapping the product with D₂O, performing ¹H NMR measurement, and calculating a yield in the same manner as in Experiment Number 1. The results are shown in Fig. 1. As shown in Fig. 1, the deuteration rate was 92%, and the actual yield of 2-naphthyl sodium was 91%.

### Experiment Number 7

N-pentyl sodium was synthesized in the same manner as in Experiment Number 1. Subsequently, 0.5 mmol (=1 molar equivalent) of 9-bromoanthracene was added and a reaction was carried out in hexane at 0 °C for 0.5 hours to synthesize 9-anthryl sodium. A product was evaluated by trapping the product with D₂O, performing ¹H NMR measurement, and calculating a yield in the same manner as in Experiment Number 1. The results are shown in Fig. 1. As shown in Fig. 1, the deuteration rate was 97%, and the actual yield of 2-naphthyl sodium was 88%.

### Experiment Number 8

N-pentyl sodium was synthesized in the same manner as in Experiment Number 1. Subsequently, 0.5 mmol (=1 molar equivalent) of 8-bromoquinoline was added and a reaction was carried out in hexane at -78 °C for 1.5 hours to synthesize 8-quinolyl sodium. A product was evaluated by trapping the product with D₂O, performing ¹H NMR measurement, and calculating a yield in the same manner as in Experiment Number 1. The results are shown in Fig. 1. As shown in Fig. 1, the deuteration rate was 94%, and the actual yield of 8-quinolyl sodium was 68%.

Based on the results of Experiment Numbers 1 to 8 above, it can be understood that an aromatic sodium compound can be synthesized from a heterocyclic compound or an aromatic compound having an electron-withdrawing group or the like on an aromatic ring thereof by adding SD in an amount of 3 molar equivalents or more and using alkyl sodium compounds generated by the reaction of SD with alkyl halide compounds.

### [Examination Example 1] Examination of organic sodium compound (alkyl sodium) synthesis conditions

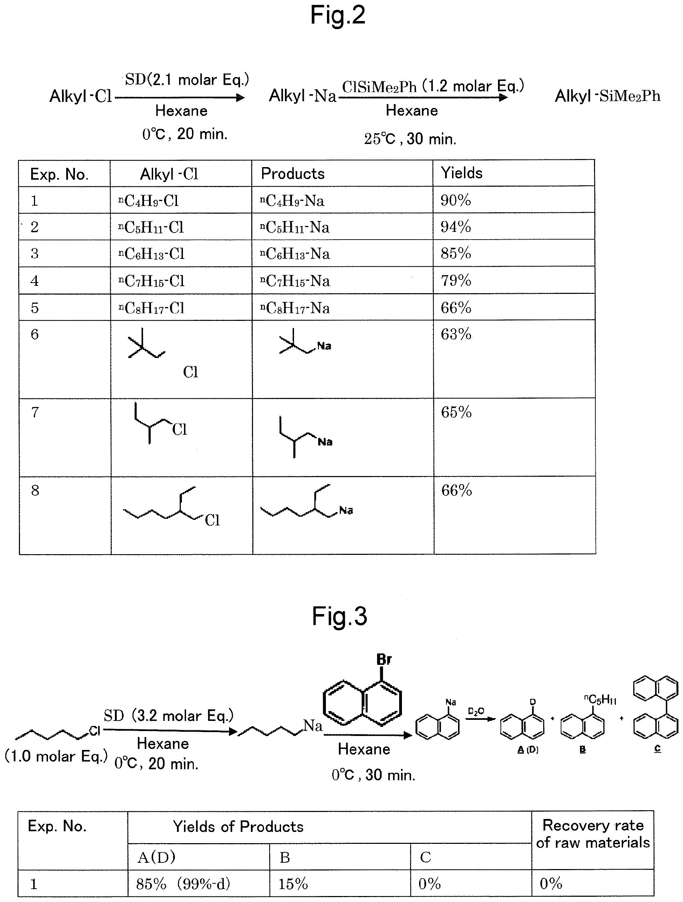

In this example, the syntheses of the organic sodium compound were examined with the synthesis conditions summarized in Fig. 2. In this example, the syntheses of various alkyl sodium compounds were examined.

### Experiment Number 1

In 2.0 ml of hexane, 2.1 molar equivalents of SD were cooled to 0 °C and 0.50 mmol (1 molar equivalent) of n-butyl chloride, a starting compound, was added dropwise. The mixture was stirred for 20 minutes to synthesize n-butyl sodium. To evaluate the product, the product was reacted with 0.60 mmol (1.2 molar equivalents) of chlorodimethylphenylsilane at 25 °C for 30 minutes, the yield of the obtained product was measured by ¹H NMR measurement, and the yield of the product was calculated from such a yield. As the yield, the ratio (%) of n-butyl sodium actually obtained to n-butyl sodium that could be theoretically generated from n-butyl chloride added to the reaction system was calculated. The results are shown in Fig. 2. As shown in Fig. 2, the yield of n-butyl sodium was 90%.

### Experiment Numbers 2 to 8

In the same manner as in Experiment Number 1, as starting compounds, n-pentyl chloride (Experiment Number 2), n-hexyl chloride (Experiment Number 3), n-heptyl chloride (Experiment Number 4), n-octyl chloride (Experiment Number 5), 1-chloro-2,2'-dimethylpropane (neopentyl chloride) (Experiment Number 6), 1-chloro-2-methylbutane (Experiment Number 7), and 1-chloro-2-ethylhexane (Experiment Number 8) were reacted with SD to synthesize alkyl sodium by halogen-sodium exchange. The results are shown in Fig. 2. As shown in Fig. 2, Experiment Number 2 had a yield of 94%, Experiment Number 3 had a yield of 85%, Experiment Number 4 had a yield of 79%, Experiment Number 5 had a yield of 66%, Experiment Number 6 had a yield of 63%, Experiment Number 7 had a yield of 65%, and Experiment Number 8 had a yield of 66%.

From the results of Experiment Numbers 1 to 8 above, it can be understood that the halogen-sodium exchange reaction proceeds smoothly and halogen alkyl sodium compounds can be synthesized from halogenated alkyl compounds by using SD. It can also be understood that the yield of alkyl sodium with less steric hindrance tends to be high.

### [Example 2] Examination of organic sodium compound (aryl sodium) synthesis conditions

In this example, the syntheses of organic sodium compounds were examined with the synthesis conditions summarized in Fig. 3. In this example, the synthesis of aryl sodium, an aromatic sodium compound, was examined using alkyl sodium compounds prepared from n-pentyl chloride.

### Experiment Number 1

In 2.0 ml of hexane, 3.2 molar equivalents of SD were cooled to 0 °C and 0.5 mmol (1.0 molar equivalent) of n-pentyl chloride, a starting compound, was added dropwise. The mixture was stirred for 20 minutes to synthesize alkyl sodium. Subsequently, 0.5 mmol (1.0 molar equivalent) of 1-bromonaphthalene was added and a reaction was carried out in hexane at 0 °C for 30 minutes to synthesize 1-naphthyl sodium by halogen-sodium exchange. A product was evaluated by trapping the product in heavy water (D₂O), performing ¹H NMR measurement, and calculating a yield. As the yield, the ratio (%) of 1-naphthyl sodium actually obtained to 1-naphthyl sodium that could be theoretically generated from 1-bromonaphthalene added to the reaction system was calculated. The results are shown in Fig. 3. As shown in Fig. 3, the deuteration rate was 99% and the yield of 1-naphthyl sodium was 85%.

Based on the results of Experiment Number 1 above, it can be understood that a corresponding aromatic sodium compound can be synthesized from a heterocyclic compound or an aromatic compound such as naphthalene having an electron-withdrawing group or the like on an aromatic ring thereof by using an alkyl sodium compound generated by the reaction of SD with an alkyl halide compound, as in the results of Example 1 above, and that a halogen-sodium exchange reaction proceeded smoothly.

### [Example 3] Examination of organic sodium compound (aryl sodium) synthesis conditions

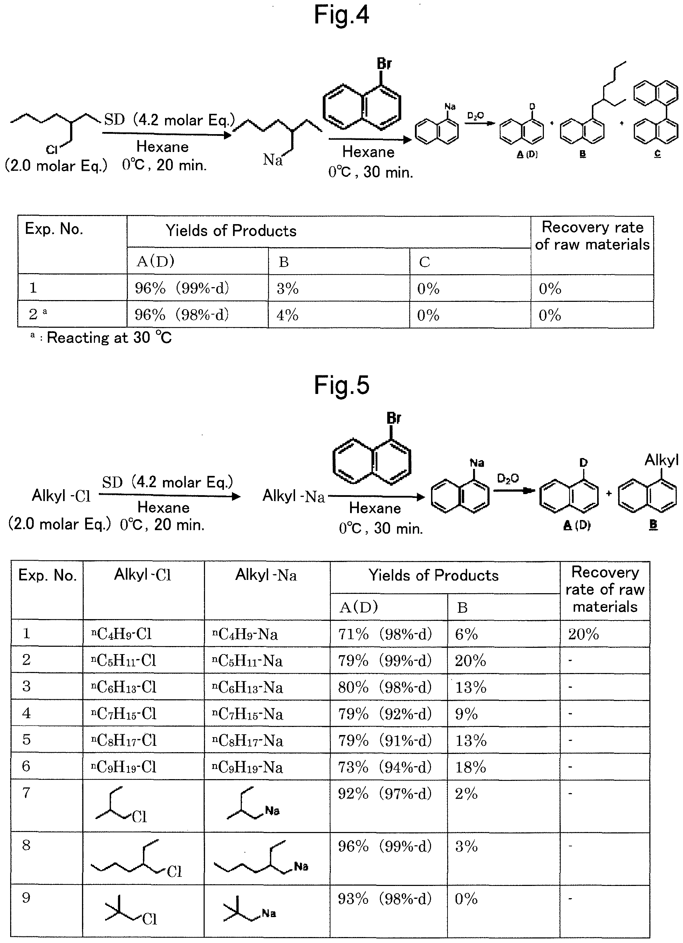

In this example, the syntheses of organic sodium compounds were examined with the synthesis conditions summarized in Fig. 4. In this example, the synthesis of aryl sodium, an aromatic sodium compound, was examined using alkyl sodium compounds prepared from highly soluble 3-(chloromethyl) heptane.

### Experiment Number 1

In 2.0 ml of hexane, 4.2 molar equivalents of SD were cooled to 0 °C and 0.5 mmol (2.0 molar equivalents) of 3-(chloromethyl) heptane, a starting compound, was added dropwise. The mixture was stirred for 20 minutes to synthesize alkyl sodium. Subsequently, 0.25 mmol (1.0 molar equivalent) of 1-bromonaphthalene was added and a reaction was carried out in hexane at 0 °C for 30 minutes to synthesize 1-naphthyl sodium by halogen-sodium exchange. A product was evaluated by trapping the product in heavy water (D₂O), performing ¹H NMR measurement, and calculating a yield. As the yield, the ratio (%) of 1-naphthyl sodium actually obtained to 1-naphthyl sodium that could be theoretically generated from 1-bromonaphthalene added to the reaction system was calculated. The results are shown in Fig. 4. As shown in Fig. 4, the deuteration rate was 99% and the yield of 1-naphthyl sodium was 96%.

### Experiment Number 2

In the same manner as in Experiment Number 1, 1-naphthyl sodium was synthesized by setting the reaction temperature at 30 °C. The results are shown in Fig. 4. As shown in Fig. 4, the deuteration rate was 98% and the yield of 1-naphthyl sodium was 96%.

By the results of Experiment Numbers 1 and 2 above, it can be understood that a corresponding aromatic sodium compound can be synthesized from a heterocyclic compound or an aromatic compound such as naphthalene having an electron-withdrawing group or the like on an aromatic ring thereof by using an alkyl sodium compound generated by the reaction of SD with an alkyl halide compound, as in the results of Example 1 and Example 2 above, and that a halogen-sodium exchange reaction proceeded smoothly. Further, by using alkyl sodium prepared from highly soluble 3-(chloromethyl) heptane as alkyl sodium, alkylation of an aromatic sodium compound can be suppressed. It can be also understood that the yield of 1-naphthyl sodium synthesized in this example could be improved with this.

### [Example 4] Examination of organic sodium compound (aryl sodium) synthesis conditions

In this example, the syntheses of organic sodium compounds were examined with the synthesis conditions summarized in Fig. 5. In this example, the synthesis of aryl sodium, an aromatic sodium compound, was examined using an alkyl sodium compound prepared from various alkyl halide compounds having different solubility and steric hindrance.

### Experiment Number 1

In 2.0 ml of hexane, 4.2 molar equivalents of SD were cooled to 0 °C and 0.5 mmol (2.0 molar equivalents) of n-butyl chloride, a starting compound, was added dropwise. The mixture was stirred for 20 minutes to synthesize alkyl sodium. Subsequently, 0.25 mmol (1.0 molar equivalent) of 1-bromonaphthalene was added and a reaction was carried out in hexane at 0 °C for 30 minutes to synthesize 1-naphthyl sodium by halogen-sodium exchange. A product was evaluated by trapping the product in heavy water (D₂O), performing ¹H NMR measurement, and calculating a yield. As the yield, the ratio (%) of 1-naphthyl sodium actually obtained to 1-naphthyl sodium that could be theoretically generated from 1-bromonaphthalene added to the reaction system was calculated. The results are shown in Fig. 5. As shown in Fig. 5, the deuteration rate was 98% and the yield of 1-naphthyl sodium was 71%.

### Experiment Numbers 2 to 9

In the same manner as in Experiment Number 1, as starting compounds, n-pentyl chloride (Experiment Number 2), n-hexyl chloride (Experiment Number 3), n-heptyl chloride (Experiment Number 4), n-octyl chloride (Experiment Number 5), n-nonyl chloride (Experiment Number 6), 1-chloro-2-methylbutane (Experiment Number 7), 1-chloro-2-ethylhexane (Experiment Number 8), and 1-chloro-2,2'-dimethylpropane (neopentyl chloride) (Experiment Number 9) were reacted with SD to synthesize 1-naphthyl sodium using alkyl sodium prepared by halogen-sodium exchange. The results are shown in Fig. 5. As shown in Fig. 5, Experiment Number 2 had a deuteration rate of 99% and a yield of 1-naphthyl sodium of 79%, Experiment Number 3 had a deuteration rate of 98% and a yield of 1-naphthyl sodium of 80%, Experiment Number 4 had a deuteration rate of 92% and a yield of 1-naphthyl sodium of 79%, Experiment Number 5 had a deuteration rate of 91% and a yield of 1-naphthyl sodium of 79%, Experiment Number 6 had a deuteration rate of 94% and a yield of 1-naphthyl sodium of 73%, Experiment Number 7 had a deuteration rate of 97% and a yield of 1-naphthyl sodium of 92%, Experiment Number 8 had a deuteration rate of 99% and a yield of 1-naphthyl sodium of 96%, and Experiment Number 9 had a deuterated ratio of 98% and a yield of 1-naphthyl sodium of 93%.

Based on the results of the above Experiment Numbers 1 to 9, it can be understood that an aromatic sodium compound can be synthesized from a heterocyclic compound or an aromatic compound having an electron-withdrawing group or the like on an aromatic ring thereof by using an alkyl sodium compound generated by the reaction of SD with an alkyl halide compound, as in the results of Examples 1 to 3 above, and that a halogen-sodium exchange reaction proceeded smoothly. In addition, alkylation of an aromatic sodium compound can be effectively suppressed with neopentyl sodium prepared from neopentyl chloride having a large steric hindrance or the like, an alkyl sodium compound. It can be also understood that the yield of 1-naphthyl sodium synthesized in this example could be improved with this.

### [Example 5] Examination of organic sodium compound (aryl sodium) synthesis conditions

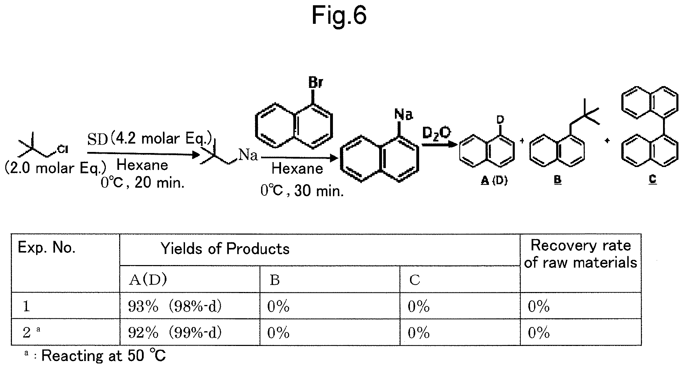

In this example, the syntheses of organic sodium compounds were examined with the synthesis conditions summarized in Fig. 6. In this example, based on the results of Example 4, the synthesis of aryl sodium was examined using neopentyl sodium prepared from neopentyl chloride.

### Experiment Number 1

In 2.0 ml of hexane, 1.13 mmol (4.2 molar equivalents) of SD were cooled to 0 °C and 0.5 mmol (2.0 molar equivalents) of neopentyl chloride, a starting compound, was added dropwise. The mixture was stirred for 20 minutes to synthesize neopentyl sodium. Subsequently, 0.25 mmol (1.0 molar equivalent) of 1-bromonaphthalene was added and a reaction was carried out in hexane at 0 °C for 30 minutes to synthesize 1-naphthyl sodium by halogen-sodium exchange. A product was evaluated by trapping the product in heavy water (D₂O), performing ¹H NMR measurement, and calculating a yield. As the yield, the ratio (%) of 1-naphthyl sodium actually obtained to 1-naphthyl sodium that could be theoretically generated from 1-bromonaphthalene added to the reaction system was calculated. The results are shown in Fig. 6. As shown in Fig. 6, the deuteration rate was 98% and the yield of 1-naphthyl sodium was 93%.

### Experiment Number 2

In the same manner as in Experiment Number 1, 1-naphthyl sodium was synthesized by setting the reaction temperature at 50 °C. The results are shown in Fig. 6. As shown in Fig. 6, the deuteration rate was 99% and the yield of 4-methoxyphenyl sodium was 92%.

Based on the results of Experiment Numbers 1 and 2 above, it can be also understood that alkylation of an aromatic sodium compound can be suppressed by using neopentyl sodium prepared from neopentyl chloride as alkyl sodium, as in the results of Example 4 above, and that the yield of 1-naphthyl sodium could be improved.

### [Example 6] Examination of organic sodium compound (aryl sodium) synthesis conditions

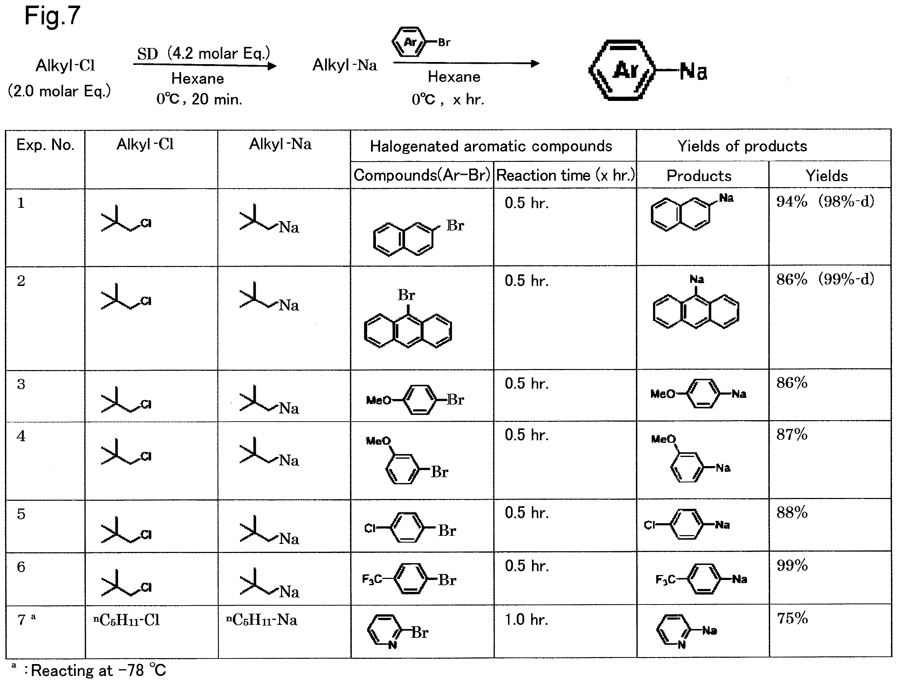

In this example, the syntheses of organic sodium compounds were examined with the synthesis conditions summarized in Fig. 7. In this example, the synthesis of a corresponding aromatic sodium compound was examined using various halogenated aromatic compounds.

### Experiment Number 1

In 2.0 ml of hexane, 4.2 molar equivalents of SD were cooled to 0 °C and 0.5 mmol (2.0 molar equivalents) of neopentyl chloride, a starting compound, was added dropwise. The mixture was stirred for 20 minutes to synthesize neopentyl sodium. Subsequently, 0.25 mmol (1.0 molar equivalent) of 2-bromonaphthalene was added and a reaction was carried out in hexane at 0 °C for 30 minutes to synthesize 2-naphthyl sodium by halogen-sodium exchange. A product was evaluated by trapping the product in heavy water (D₂O), performing ¹H NMR measurement, and calculating a yield. As the yield, the ratio (%) of 2-naphthyl sodium actually obtained to 2-naphthyl sodium that could be theoretically generated from 2-bromonaphthalene added to the reaction system was calculated. The results are shown in Fig. 7. As shown in Fig. 7, the deuteration rate was 98% and the yield of 2-naphthyl sodium was 94%.

### Experiment Number 2

0.25 mmol (1.0 molar equivalent) of 9-bromoanthracene was added to neopentyl sodium synthesized in the same manner as in Experiment Number 1, and the mixture was reacted in hexane at 0 °C for 30 minutes to synthesize 9-anthracenyl sodium. A product was evaluated by trapping the product in heavy water (D₂O), performing ¹H NMR measurement and calculating a yield, in the same manner as in Experiment Number 1. The results are shown in Fig. 7. As shown in Fig. 7, the deuteration rate was 99% and the yield of 9-anthracenyl sodium was 86%.

### Experiment Number 3

0.25 mmol (1.0 molar equivalent) of 1-bromo-4-methoxybenzene was added to neopentyl sodium synthesized in the same manner as in Experiment Number 1, and the mixture was reacted in hexane at 0 °C for 30 minutes to synthesize 4-methoxyphenyl sodium. A product was evaluated by trapping the product with 0.3 mmol (1.2 molar equivalents) of chlorodimethylphenylsilane, performing ¹H NMR measurement and calculating a yield, in the same manner as in Examination Example 2. The results are shown in Fig. 7. As shown in Fig. 7, the yield of 4-methoxyphenyl sodium was 86%.

### Experiment Number 4

0.25 mmol (1.0 molar equivalent) of 1-bromo-3-methoxybenzene was added to neopentyl sodium synthesized in the same manner as in Experiment Number 1, and the mixture was reacted in hexane at 0 °C for 30 minutes to synthesize 3-methoxyphenyl sodium. A product was evaluated by trapping the product with 0.3 mmol (1.2 molar equivalents) of chlorodimethylphenylsilane, performing ¹H NMR measurement and calculating a yield, in the same manner as in Examination Example 2. The results are shown in Fig. 7. As shown in Fig. 7, the yield of 3-methoxyphenyl sodium was 87%.

### Experiment Number 5

0.25 mmol (1.0 molar equivalent) of 1-bromo-4-chlorobenzene was added to neopentyl sodium synthesized in the same manner as in Experiment Number 1, and the mixture was reacted in hexane at 0 °C for 30 minutes to synthesize 4-chlorophenyl sodium. A product was evaluated by trapping the product with 0.3 mmol (1.2 molar equivalents) of chlorodimethylphenylsilane, performing ¹H NMR measurement and calculating a yield, in the same manner as in Examination Example 2. The results are shown in Fig. 7. As shown in Fig. 7, the yield of 4-chlorophenyl sodium was 88%.

### Experiment Number 6

0.25 mmol (1.0 molar equivalent) of 1-bromo-4-trifluoromethylbenzene was added to neopentyl sodium synthesized in the same manner as in Experiment Number 1, and the mixture was reacted in hexane at 0 °C for 30 minutes to synthesize 4-trifluoromethylphenyl sodium. A product was evaluated by trapping the product with 0.3 mmol (1.2 molar equivalents) of chlorodimethylphenylsilane, performing ¹H NMR measurement and calculating a yield, in the same manner as in Examination Example 2. The results are shown in Fig. 7. As shown in Fig. 7, the yield of 4-trifluoromethylphenyl sodium was 99%.

### Experiment Number 7

0.25 mmol (1.0 molar equivalent) of 2-bromo-pyridine was added to neopentyl sodium synthesized in the same manner as in Experiment Number 1, and the mixture was reacted in hexane at -78 °C for 1 hour to synthesize 2-pyridinyl sodium. A product was evaluated by trapping the product with 0.3 mmol (1.2 molar equivalents) of chlorodimethylphenylsilane, performing ¹H NMR measurement and calculating a yield, in the same manner as in Examination Example 2. The results are shown in Fig. 7. As shown in Fig. 7, the yield of 2-pyridinyl sodium was 75%.

Based on the above results of Experiment Numbers 1 to 7, it can be also understood that a corresponding aromatic sodium compound can be synthesized by the halogen-sodium exchange reaction with alkyl sodium even when various halogenated aromatic compounds are used.

### Industrial Applicability

The present invention is particularly useful in the synthesis of an aromatic sodium compound and in all technical fields that utilize an aromatic sodium compound synthesized by such synthesis methods, especially in the field of manufacturing medicine, agrochemicals, and electronic materials that utilize coupling reaction.

## Claims

1. A method for synthesizing an aromatic sodium compound, the method comprising:
a step A in which, in a reaction solvent, an alkyl halide compound represented by general formula I (R¹-X¹) (wherein R¹ is an alkyl group and X¹ is a halogen atom) is reacted with a dispersion that is obtained by dispersing sodium into a dispersion solvent, thereby obtaining an alkyl sodium compound represented by general formula II (R¹-Na) (wherein R¹ is the same as R¹ of general formula I); and
a step B in which, a halogenated aromatic compound represented by general formula III (R²-X²) (wherein, in the formula, R² is an aromatic group that may have a substituent that does not react with sodium, and X² is a halogen atom) is added into the reaction solvent after the step A to react with the alkyl sodium compound represented by general formula II (R¹-Na), which has been obtained in the step A, thereby performing halogen-sodium exchange and obtaining an aromatic sodium compound represented by general formula IV (R²-Na) (wherein R² is the same as R² of general formula III).

2. The method for synthesizing an aromatic sodium compound according to claim 1, wherein R² is an aromatic group having at least one electron-withdrawing group on an aromatic ring thereof.

3. The method for synthesizing an aromatic sodium compound according to claim 1 or 2, the method further comprising: a step C in which the alkyl halide compound represented by general formula V (R¹-X²) obtained by halogen-sodium exchange is subjected to Wurtz coupling reaction with the dispersion that is obtained by dispersing sodium into a dispersion solvent.

4. The method for synthesizing an aromatic sodium compound according to claim 3, wherein the dispersion that is obtained by dispersing sodium into a dispersion solvent has a molar ratio of 3 or more to 4 or less to the alkyl halide compound represented by general formula I (R¹-X¹) in an entire synthesis system.
